# EUROPÄISCHE PATENTSCHRIFT

(11) **EP 2 341 797 B1**
(45) Veröffentlichungstag und Bekanntmachung des Hinweises auf die Patenterteilung: **10.02.2016**
(21) Anmeldenummer: 09737406.0
(22) Anmeldetag: 16.10.2009
(51) Int. Cl.: F16C 33/44, F16C 33/40, F16C 33/38, F16C 29/04, A47B 88/10

(54) **AUSZUGSFÜHRUNG FÜR MÖBEL UND VERFAHREN ZUR HERSTELLUNG EINER AUSZUGSFÜHRUNG**
PULL-OUT GUIDE FOR FURNITURE AND METHOD FOR PRODUCING A PULL-OUT GUIDE
GLISSIÈRE DE TIROIR POUR MEUBLE ET PROCÉDÉ DE FABRICATION D'UNE GLISSIÈRE DE TIROIR

(30) Priorität: 28.10.2008 DE 102008053504
(43) Veröffentlichungstag der Anmeldung: 13.07.2011
(60) Teilanmeldung: 13152813.5
(73) Patentinhaber: Paul Hettich GmbH & Co. KG, 32278 Kirchlengern (DE)
(72) Erfinder: JÄHRLING, Peter, 32257 Bünde (DE); HOFFMANN, Andreas, 32257 Bünde (DE)
(74) Vertreter: Dantz, Jan Henning
(86) Internationale Anmeldenummer: PCT/EP2009/063527
(87) Internationale Veröffentlichungsnummer: WO 2010/049283

(56) Entgegenhaltungen:
- EP-A- 0 439 774
- EP-A- 1 589 291
- EP-A- 1 873 460
- EP-A1- 1 956 256
- WO-A1-99/66222
- DE-A1- 2 838 330
- DE-A1- 19 742 939
- GB-A- 580 039
- GB-A- 190 825 276
- US-A- 2 569 531
- US-A1- 2003 022 797
- US-B1- 6 395 677

## Beschreibung

Die vorliegende Erfindung betrifft eine Auszugsführung für Möbel, mit einer an einem Möbelkorpus montierbaren Führungsschiene und mindestens einer über Wälzkörper an der Führungsschiene verfahrbar gelagerten Laufschiene, sowie ein Verfahren zur Herstellung einer Auszugsführung.

Es ist bekannt, dass Auszugsführungen für eine leichtgängige Verfahrbarkeit der verfahrbar gelagerten Schienen geschmiert werden, damit die Wälzkörper entlang der Laufbahnen verbesserte Laufeigenschaften aufweisen und zudem der Korrosionsschutz erhöht ist. Zudem lassen sich über eine Schmierung mit Fett die Laufgeräusche dämpfen. Bei Auszugsführungen tritt allerdings das Problem auf, dass diese nicht abgedichtet sind und es zu Beeinträchtigungen durch eindringende Fremdkörper oder Verschmutzungen kommen kann. Zudem kann die Schmierung ungewollt entfernt werden. Der Auftrag des Fettes erfolgt in der Regel bei der Herstellung, wobei die Dosierung schwierig ist, da ein Großteil des Fettes auf Flächen aufgetragen wird, die nie in Kontakt mit den Wälzkörpern kommen. Dies ist materialintensiv, wobei ein Fettüberschuss auch die Laufgüte und Funktion negativ beeinflussen kann.

Die EP 1 589 291 offenbart ein Auszugssystem für ein Haushaltsgerät, bei dem ein Wälzkörperkäfig aus Stahl eine Schmierstoffschicht als Beschichtung aufweist.

Es ist daher Aufgabe der vorliegenden Erfindung, eine Auszugsführung für Möbel zu schaffen, die eine optimierte Schmierung aufweist.

Diese Aufgabe wird mit einer Auszugsführung mit den Merkmalen des Anspruches 1 gelöst.

Erfindungsgemäß wird eine Auszugsführung für Möbel bereitgestellt, bei der die Wälzkörper in einem Wälzkörperkäfig gelagert sind, der zumindest teilweise aus einem schmierstoffhaltigen Material besteht. Dadurch kann die Schmierung der Wälzkörper gezielt dort erfolgen, wo ein Schmierstoffbedarf besteht, nämlich an den bewegten Flächen der Wälzkörper, die dann für eine gewisse Benetzung der Laufflächen an den Schienen sorgen. Es wird vermieden, dass Schmierstoff auf Flächen gelangt, die nicht geschmiert werden müssen. Zudem kann eine exakte Dosierung des Schmierstoffes über eine lange Zeit erfolgen, da das Aufbringen von Schmierstoff nicht nur einmalig bei der Herstellung erfolgt, sondern kontinuierlich während einer Benutzung der Auszugsführung.

Die thermische Eigenbewegung von Teilchen liegt der Diffusion zugrunde. Teilchen können Atome, Moleküle oder Ladungsträger sein. In dem vorliegenden Fall handelt es sich um Schmierstoff-Moleküle. Ein makroskopischer Stofftransport wird dadurch bewirkt, dass bei ungleichmäßiger Verteilung sich statistisch mehr Teilchen aus dem Bereich hoher Konzentration in den Bereich geringerer Konzentration bewegen als umgekehrt. Damit ist bis zum Konzentrationsausgleich eine Schmierung der Auszugsführung gewährleistet. Den beschriebenen Diffusionsvorgängen können die Fick'schen Gesetze zugrunde gelegt werden.

Gemäß einer bevorzugten Ausgestaltung der Erfindung gleiten die Wälzkörper an dem schmierstoffhaltigen Material mit einer Kontaktfläche entlang. Dadurch kann die Kontaktfläche der Wälzkörper mit Schmierstoff benetzt werden, wobei die Wälzkörper dann für eine Verteilung auf die Laufbahnen sorgen. Das schmierstoffhaltige Material kann für einen langen Zeitraum die Wälzkörper schmieren, da der in dem Material enthaltene Schmierstoff an die Oberfläche diffundiert und insofern bei jeder Bewegung der Wälzkörper ein geringer Anteil des Schmierstoffes auf den Wälzkörper übertragen wird. Diese gezielte Schmierung der Wälzkörper führt zu einem optimalen Schmierverhalten. Insbesondere können auch niedrigviskose Schmierstoffe eingesetzt werden, z.B. Öle, die bei einer einmaligen Schmierung bei der Herstellung der Ausziehführung nicht eingesetzt werden können.

Durch eine geringe Viskosität des Schmierstoffes kann ein großer Temperaturbereich für den Einsatz der Auszugsführungen abgedeckt werden. Somit können in Tiefkühlgeräten die gleichen Auszugsführungen wie in Backöfen eingesetzt werden. Durch die Einlagerung des Schmierstoffes in das schmierstoffhaltige Material tritt nach der Nutzung von Backofenfunktionen wie z.B. der Pyrolysefunktion wieder neuer Schmierstoff durch Diffusion an die Kontaktfläche zu dem Wälzkörper und bewirkt somit seine Schmierung. Der Schmierstoff ist daher vorzugsweise in einem Bereich von über 200°C, insbesondere auch in einem Bereich von über 400°C einsetzbar. Im Tiefkühlbereich ist der Schmierstoff vorzugsweise in einem Bereich unter -15°C einsetzbar, insbesondere auch in einem Bereich unter -40°C einsetzbar.

Als schmierstoffhaltiges Material ist auch eine Substanz wie z.B. ein Wachs denkbar, die den Schmierstoff nach und nach freisetzt.

In einer Ausgestaltung ist das schmierstoffhaltige Material ein poröser Körper aus Sintermaterial oder Kunststoff, in dem Öl als Schmierstoff eingelagert ist. Das eingelagerte Öl kann durch Kapillare oder extra eingerichtete Kanäle nachfließen. Der Körper kann nach Art eines Schwammes Schmierstoff aufnehmen und dann bei Betätigung der Auszugsführung nach und nach wieder abgeben.

Die Wälzkörper sind z.B. in einem einzigen Wälzkörperkäfig eingelagert, der vollständig aus dem schmierstoffhaltigen Material besteht. Dabei kann der Wälzkörperkäfig im Spritzgussverfahren aus Kunststoff hergestellt sein, wobei die Wälzkörper umspritzt werden.

Als Trägermaterialien für den Wälzkörperkäfig können alle Materialien genutzt werden, die über eine höhere Festigkeit als das schmierstoffhaltige Material verfügen. Sie müssen den Belastungen bei der Verwendung der Auszugsführung standhalten.

In einer alternativen Ausgestaltung weist der Wälzkörperkäfig eine Vielzahl von Taschen auf, in die jeweils ein Wälzkörperhalter aus schmierstoffhaltigem Material eingefügt ist. In diesem Wälzkörperhalter ist mindestens ein Wälzkörper drehbar eingelagert. Der Wälzkörperhalter kann dabei form-, kraft oder stoffschlüssig an dem Wälzkörperkäfig festgelegt sein, wobei vorzugsweise an einem Wälzkörperhalter mehrere Wälzkörper eingelagert sind.

In einer weiteren Ausgestaltung ist der Wälzkörperkäfig leistenförmig ausgebildet und weist einzelne Aufnahmen für Wälzkörper auf. Zumindest der Bereich der Aufnahmen ist mit dem schmierstoffhaltigen Material beschichtet, so dass auch hier für eine optimale Schmierung der Wälzkörper gesorgt ist. Auch eine Schmierung durch hervorstehende Streifen oder Vorsprünge kann eine langfristige Schmierung gewährleisten.

Bei einem erfindungsgemäßen Verfahren zur Herstellung einer Auszugsführung werden zunächst eine Führungsschiene und mindestens eine Laufschiene hergestellt. Ferner wird mindestens ein poröser Körper, der zumindest einen Teil eines Wälzkörperkäfigs bildet mit Schmierstoff getränkt. Anschließend wird die Führungsschiene, der Wälzkörperkäfig und die mindestens eine Laufschiene zu einer Auszugsführung zusammengesetzt, wobei ein Schmieren der Wälzkörper und der Laufflächen durch Bewegen der mindestens einen Laufschiene relativ zu der Führungsschiene erfolgt. Ergänzend kann die Auszugsführung mit einer auszugsverlängernden Mittelschiene ausgestattet sein, um einen Vollauszug zu realisieren. Diese Mittelschiene wird dann zwischen Führungsschiene und Laufschiene angeordnet.

Zur Beschleunigung der Sättigung des schmierstoffhaltigen Materials mit Schmierstoff kann ein Hochdruck-Verfahren wie z.B. eine Kesseldruckimprägnierung eingesetzt werden. Hierbei wird der Schmierstoff bei Drücken bis zu 15 bar in das poröse Material gepresst um das schmierstoffhaltige Material zu erhalten.

Durch jede Betätigung der Auszugsführung wird eine Schmierung der Auszugsführung ausgelöst. Durch die Bewegung der Wälzkörper bzw. der Auszugsführung wird Schmierstoff in die Laufbahnen der Auszugsführung übertragen. Durch die Übertragung von Schmierstoff an der Kontaktfläche schmierstoffhaltiges Material zum Wälzköper bzw. zur Laufbahn der Auszugsführung sinkt die Schmierstoffkonzentration in der Nähe der Kontaktfläche im schmierstoffhaltigen Material. Durch weiter vorne beschriebene Diffusionsvorgänge erfolgt über einen gewissen Zeitraum ein Schmierstoff-Konzentrationsausgleich im schmierstoffhaltigen Material. Durch jede Betätigung der Auszugsführung werden diese Vorgänge erneut ausgelöst.

Vorzugsweise umfasst der Wälzkörperkäfig ein leistenförmiges Trägermaterial, an dem ein poröser Körper beschichtet oder mechanisch festgelegt wird. Dies ermöglicht eine Herstellung der Auszugsführung mit einer geringen Masse, insbesondere wenn als Trägermaterial ein Kunststoff eingesetzt wird. Dabei kann das Trägermaterial an gegenüberliegenden Endseiten mit einem porösen Körper beschichtet werden um an den porösen Körpern Taschen zur Aufnahme der Wälzkörper auszubilden.

Alternativ ist eine Fertigung der porösen Körper als Einzelkomponenten aus keramischen oder metallischen Werkstoffen denkbar.

Die Erfindung wird nachfolgend anhand mehrerer Ausführungsbeispiele mit Bezug auf die beigefügten Zeichnungen näher erläutert. Es zeigen:

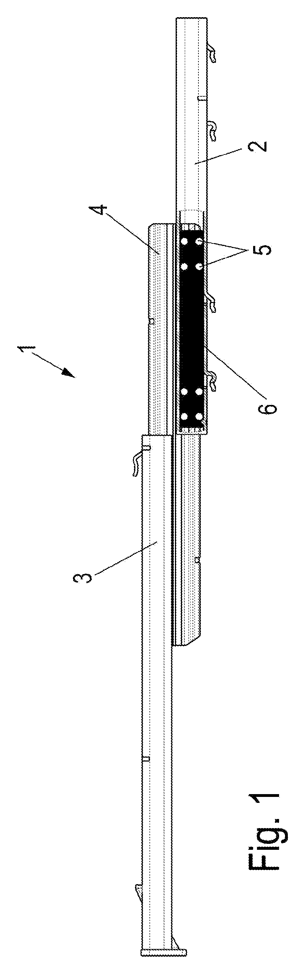

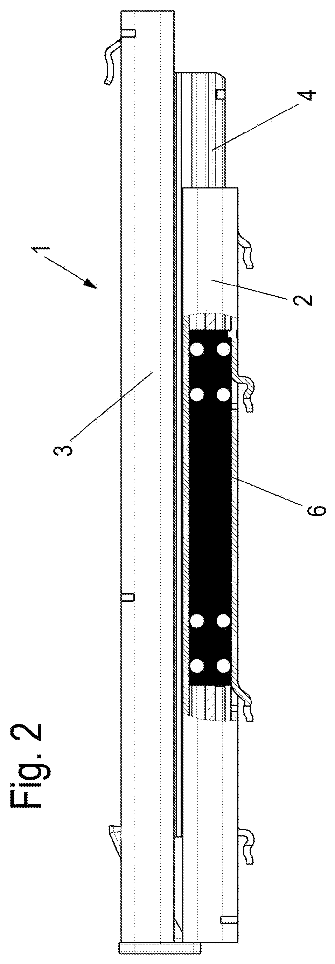

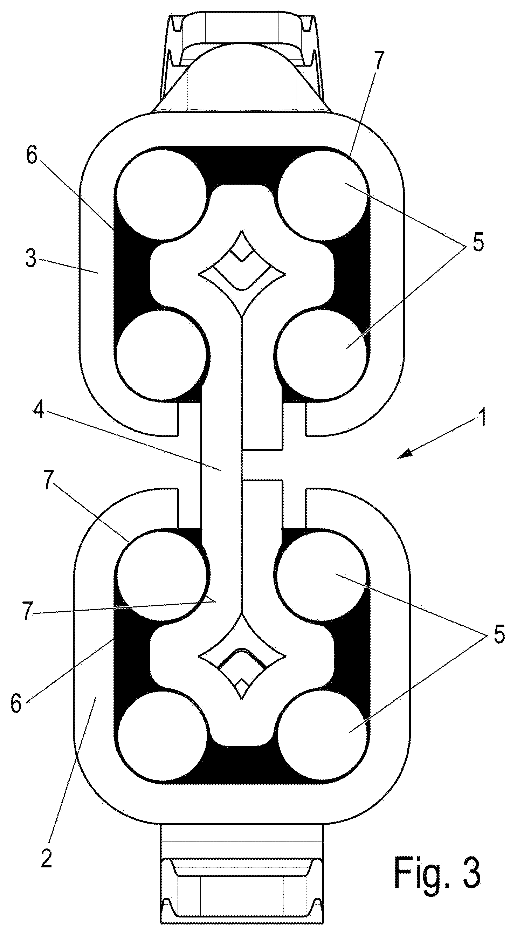

- Figuren 1 - 3: mehrere Ansichten eines ersten Ausführungsbeispieles einer erfindungsgemäßen Auszugsführung;
- Figuren 4 - 8: mehrere Ansichten eines zweiten Ausführungsbeispieles eines Wälzkörperkäfigs einer erfindungsgemäßen Auszugsführung;
- Figuren 9 - 13: mehrere Ansichten einer dritten Ausführungsform eines erfindungsgemäßen Wälzkörperkäfigs, und
- Figuren 14 - 16: mehrere Ansichten einer vierten Ausführungsform eines erfindungsgemäßen Wälzkörperkäfigs.

Eine Auszugsführung 1 umfasst eine an einem Möbelkorpus montierbare Führungsschiene 2 und eine Laufschiene 3, an der ein Schubkasten oder anderes Schubelement montiert werden kann. Die Laufschiene 3 ist über Wälzkörper an einer Mittelschiene 4 gelagert, die wiederum über Wälzkörper 5 an der Führungsschiene 2 verfahrbar gelagert ist. Es ist auch möglich, an der Führungsschiene 2 die Laufschiene 3 direkt über Wälzkörper 5 ohne eine Mittelschiene 4 zu lagern.

Bei der Auszugsführung 1 sind die Wälzkörper 5 zwischen Führungsschiene 2 und Mittelschiene 4 sowie der Mittelschiene 4 und der Laufschiene 3 in einem Wälzkörperkäfig 6 gelagert, der einstückig aus einem schmierstoffhaltigen Material hergestellt ist. Der Wälzkörperkäfig 6 ist aus einem porösen Körper aus Sintermaterial oder Kunststoff gebildet, in dem Öl als Schmierstoff eingelagert ist. Dabei sind die Wälzkörper 5 durch das schmierstoffhaltige Material umspritzt.

Der Wälzkörperkäfig 6 füllt somit den Innenraum zwischen der Führungsschiene 2 und der Mittelschiene 4 sowie der Mittelschiene 4 und der Laufschiene 3 weitgehend aus, so dass die Wälzkörper 5 vor Verschmutzungen geschützt angeordnet sind. Zudem kann der Schmierstoff durch Kapillaren oder entsprechende Kanäle in dem Wälzkörperkäfig 6 auf die Kontaktflächen der Wälzkörper 5 gelangen, die dann den Schmierstoff auf die Laufbahnen 7 verteilen. Bei jeder Bewegung der Auszugsführung 1 werden die Wälzkörper 5 gedreht, so dass die Kontaktflächen der Wälzkörper 5, die an dem Wälzkörperkäfig 6 anliegen, geringfügig mit Schmierstoff benetzt werden. Dadurch erfolgt während der gesamten Lebensdauer der Auszugsführung 1 kontinuierlich eine Schmierung, die über einen sehr langen Zeitraum aufrecht erhalten werden kann.

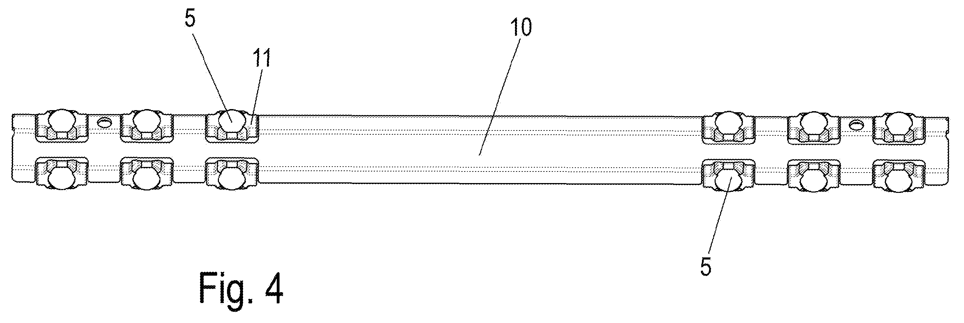

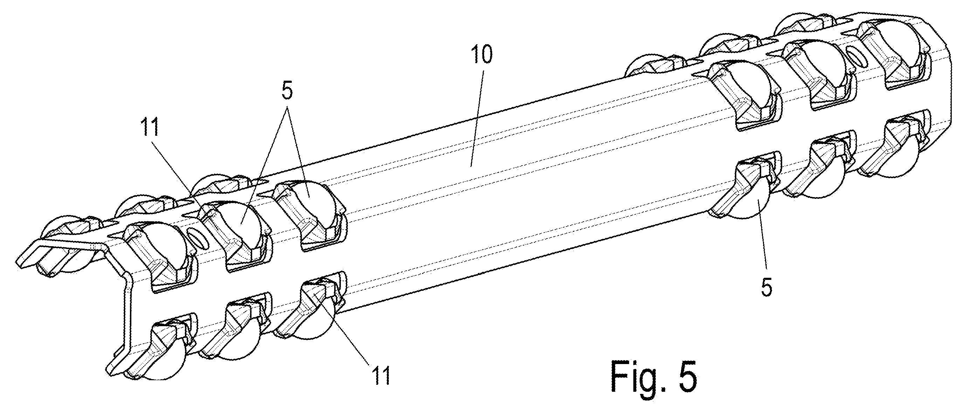

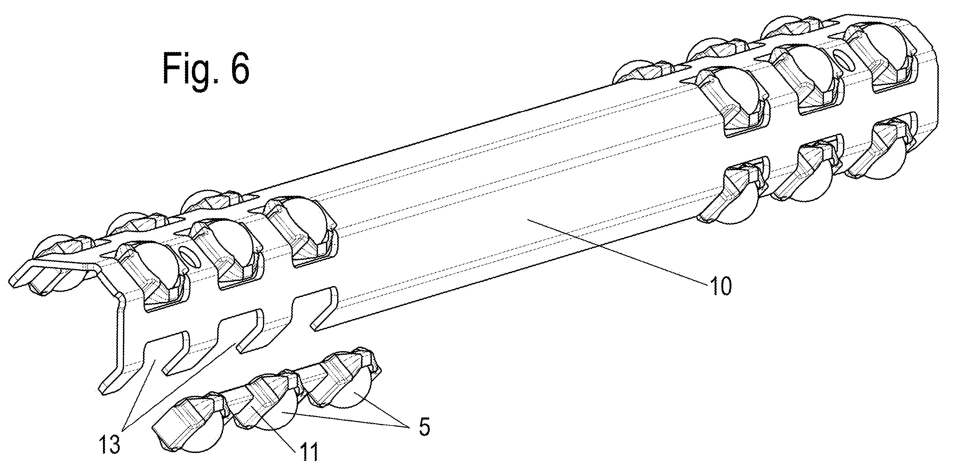

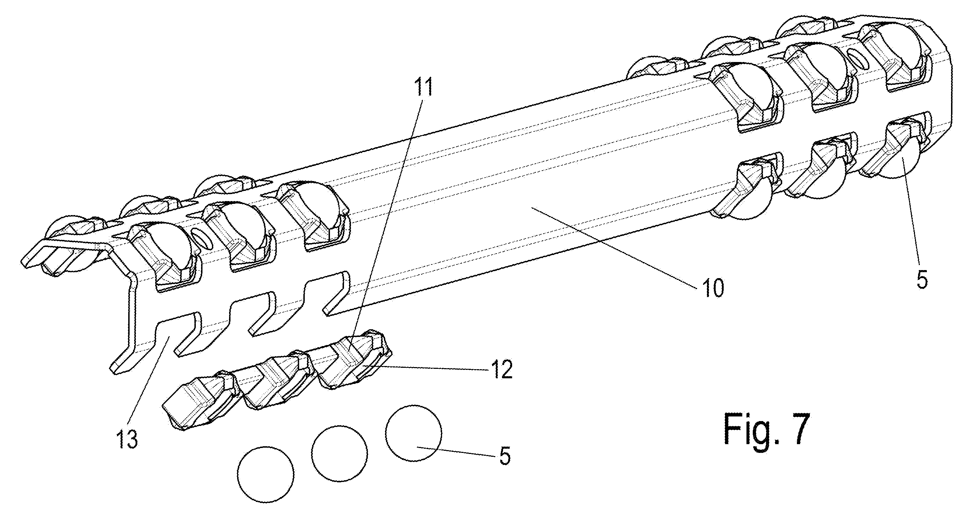

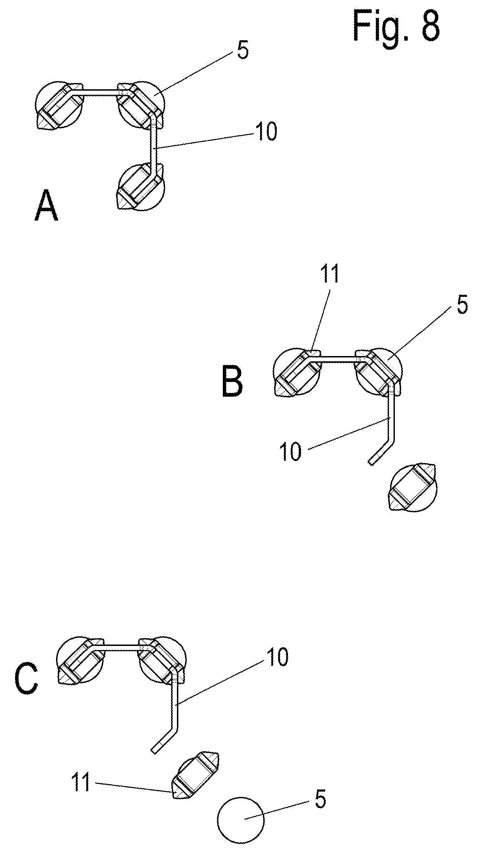

In den Figuren 4 bis 8 ist eine modifizierte Ausführungsform eines Wälzkörperkäfigs 10 gezeigt, der eine Leiste aus einem Trägermaterial mit höherer Festigkeit aufweist, in der einzelne Aussparungen 13 an zwei gegenüberliegenden Enden ausgebildet sind. Auf jeder Seite sind in Längsrichtung drei voneinander beabstandete Aussparungen 13 vorgesehen, in denen jeweils ein kugelförmiger Wälzkörper 5 aufgenommen ist. In einer Ebene senkrecht zur Längsrichtung sind jeweils drei Wälzkörper 5 an dem Wälzkörperkäfig 10 vorgesehen. In jeder Aussparung 13 sind an dem Wälzkörperkäfig 10 Wälzkörperhalter 11 aus einem schmierstoffhaltigen Material vorgesehen. Die Wälzkörperhalter 11 können an den Aussparungen 13 des Wälzkörperkäfigs 10 form-, kraft- oder stoffschlüssig festgelegt sein. Wie in den Figuren 7 sowie 8A bis 8C gezeigt ist, können die kugelförmigen Wälzkörper 5 zunächst in Aufnahmen 12 der Wälzkörperhalter 11 eingefügt werden. Dort können die Wälzkörper 5 rastend festgelegt sein, wobei der Wälzkörperhalter 11 so ausgebildet ist, dass drei Aufnahmen 12 vorgesehen sind und der Wälzkörperhalter 11 dann an den entsprechenden Aussparungen 13 der Schienen des Wälzkörperkäfigs 10 montiert wird. Es ist auch möglich, mit einem Wälzkörperhalter mehr als drei Wälzkörper 5, beispielsweise sechs oder neun Wälzkörper 5 aufzunehmen.

Auch bei diesem Ausführungsbeispiel liegen die Wälzkörper 5 mit einer Kontaktfläche an einem schmierstoffhaltigen Material an, so dass bei der Benutzung der Auszugsführung und Bewegung der Wälzkörper 5 eine kontinuierliche Schmierung erfolgt.

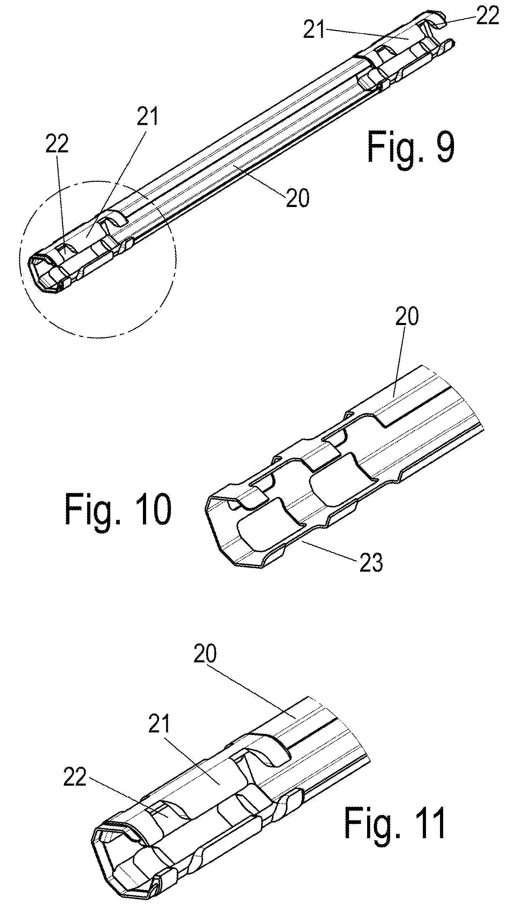

Bei dem in Figur 9 bis 13 gezeigten Ausführungsbeispiel ist ein Wälzkörperkäfig 20 in Form einer leistenförmigen Schiene aus einem Trägermaterial mit höherer Festigkeit vorgesehen, an der endseitig Aussparungen 22 zur Aufnahme von Wälzkörpern 5 vorgesehen sind. An gegenüberliegenden Seiten des Wälzkörperkäfigs 20 ist an einem Endabschnitt 21 eine Beschichtung aus einem schmierstoffhaltigen Material vorgesehen. In Figur 10 ist die Schiene aus einem Trägermaterial mit höherer Festigkeit des Wälzkörperkäfigs 20 im Rohzustand gezeigt, wobei zu sehen ist, dass die Aussparungen 23 in dem Bauteil deutlich breiter ausgebildet sind als die Aufnahmen 22 für die Wälzkörper. Das Rohteil wird anschließend an einem Endabschnitt 21 mit dem schmierstoffhaltigen Material beschichtet, so dass dann Aufnahmen 22 für Wälzkörper gebildet sind und eine Kontaktfläche der Wälzkörper 5 an dem schmierstoffhaltigen Material anliegt.

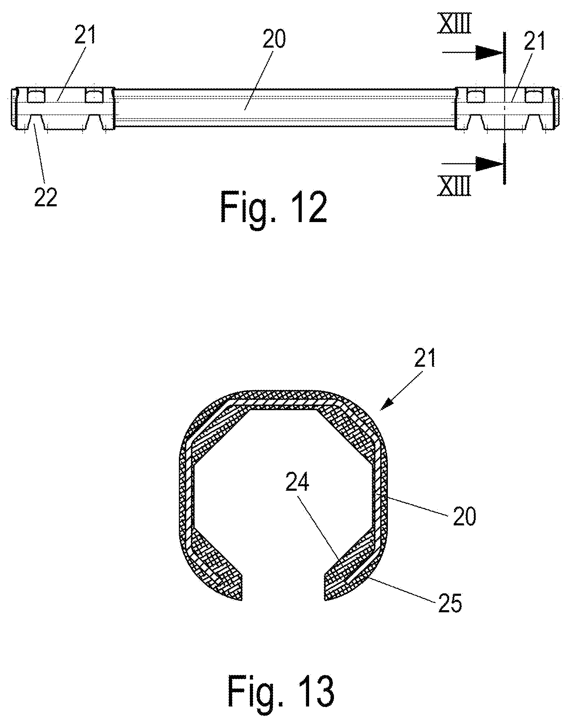

Wie aus den Figuren 12 und 13 zu sehen ist, bildet die U-förmige Leiste aus aus einem Trägermaterial mit höherer Festigkeit für die Beschichtung lediglich einen Stützkörper, wobei die Beschichtung eine unterschiedliche Dicke aufweist und beispielsweise an einer Innenseite 24 eine größere Dicke als an einer Außenseite 25 besitzt. Dadurch kann gezielt in Bereichen benachbart zu den Wälzkörpern 5 eine größere Schichtdicke vorgesehen werden, was eine längere Schmierung ermöglicht.

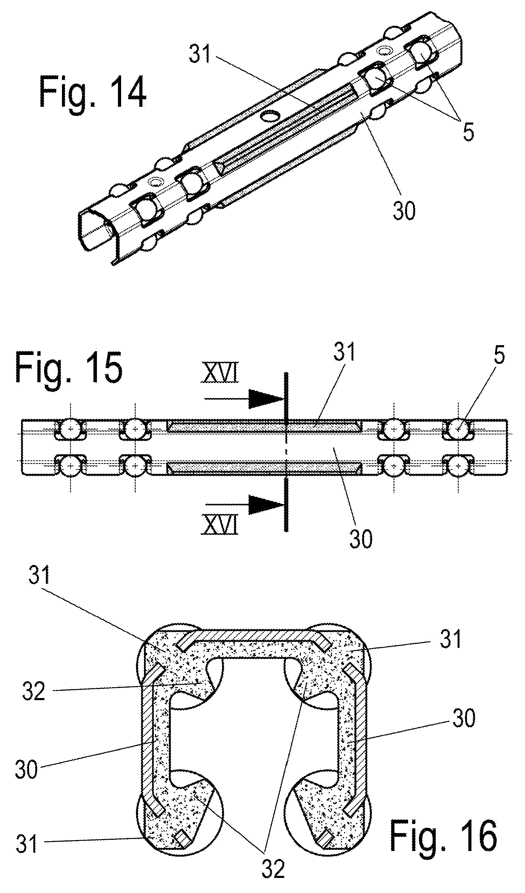

In den Figuren 14 bis 16 ist ein modifiziertes Ausführungsbeispiel eines Wälzkörperkäfigs 30 in Form einer leistenförmigen Schiene aus einem Trägermaterial mit höherer Festigkeit vorgesehen, an der Aussparungen zur Aufnahme von Wälzkörpern 5 vorgesehen sind. Die Wälzkörper 5 sind dabei direkt an den Begrenzungen der Aufnahmen gelagert. An einem mittleren Abschnitt beabstandet von den Wälzkörpern 5 sind mehrere Streifen 31 aus einem schmierstoffhaltigen Material vorgesehen.

Wie in Figur 16 zu sehen ist, stehen die Streifen 31 an der Außenseite soweit hervor, dass sie sich bis zum äußeren Umfang der Wälzkörper 5 oder geringfügig darüber hinaus erstrecken. An der Innenseite des Wälzkörperkäfigs 30 sind weitere nach innen hervorstehende Streifen 32 aus schmierstoffhaltigem Material vorgesehen, die ebenfalls bis zum äußeren Umfang der Wälzkörper hervorstehen. Die Streifen 31 und 32 stehen daher in Kontakt mit den Laufflächen an den Schienen 2, 3 oder 4 und können so für einen Schmierstoffauftrag sorgen, wenn die Schienen 2, 3 und 4 relativ zueinander bewegt werden.

Die Streifen 31 und 32 sind integral miteinander ausgebildet und die einzelnen Streifen über Stege 33 miteinander verbunden. Dadurch können die Streifen 31 und 32 sowie die Stege 33 in einem Beschichtungsschritt auf die Schiene des Wälzkörperkäfigs aufgebracht werden.

Die Form der Streifen 31 und 32 kann natürlich variiert werden, insbesondere ist keine längliche Ausbildung erforderlich und es können auch Vorsprünge mit anderen Geometrien zur Schmierung der Laufflächen eingesetzt werden.

Bei einem Verfahren zur Herstellung einer Auszugsführung werden zunächst eine Führungsschiene und mindestens eine Laufschiene durch Stanzen und Biegen eines Metallbleches hergestellt. Zudem werden ein oder mehrere poröse Körper, der oder die zumindest einen Teil eines Wälzkörperkäfigs bildet bzw. bilden, mit Schmierstoff getränkt. Der Schmierstoff zieht dann jeweils in den porösen Körper ein und kann dann später wieder abgegeben werden. Der Tränkvorgang wird vorzugsweise in einem Zeitraum zwischen 10 und 30 Stunden, insbesondere 20 bis 28 Stunden durchgeführt. Anschließend werden die Führungsschiene, der Wälzkörperkäfigs und die mindestens eine Laufschiene zu einer Auszugsführung zusammengesetzt, wobei ein Schmieren der Wälzkörper und der Laufflächen durch Bewegen der mindestens einen Laufschiene relativ zu der Führungsschiene erfolgt.

Der poröse Körper für den Wälzkörperkäfig kann dabei aus Kunststoff durch Spritzguss hergestellt werden, insbesondere im zwei Komponenten Spritzgussverfahren, um das Kunststoffmaterial gleichzeitig an einem Trägermaterial festzulegen.

### Bezugszeichenliste

- 1: Auszugsführung
- 2: Führungsschiene
- 3: Laufschiene
- 4: Mittelschiene
- 5: Wälzkörper
- 6: Wälzkörperkäfig
- 7: Laufbahnen
- 10: Wälzkörperkäfig
- 13: Aussparung
- 20: Wälzkörperkäfig
- 21: Endabschnitt
- 22: Aufnahme
- 23: Aussparung
- 24: Innenseite
- 25: Außenseite
- 30: Wälzkörperkäfig
- 31: Streifen
- 32: Streifen
- 33: Steg

## Patentansprüche

1. Auszugsführung (1) für Möbel, mit einer an einem Möbelkorpus montierbaren Führungsschiene (2) und mindestens einer über Wälzkörper (5) an der Führungsschiene (2) verfahrbar gelagerten Laufschiene (3, 4), wobei die Wälzkörper (5) in einem Wälzkörperkäfig (6, 10, 20, 30) gelagert sind, der zumindest teilweise aus einem schmierstoffhaltigen Material besteht, **dadurch gekennzeichnet, dass** das aus dem schmierstoffhaltigen Material bestehende Teil des Wälzkörperkäfigs (6,10, 20, 30) aus einem porösen Körper gebildet ist, der mit Schmierstoff getränkt ist.

2. Auszugsführung nach Anspruch 1, **dadurch gekennzeichnet, dass** die Wälzkörper (5) an dem schmierstoffhaltigen Material mit einer Kontaktfläche entlang gleiten.

3. Auszugsführung nach Anspruch 2, **dadurch gekennzeichnet, dass** über das schmierstoffhaltige Material die Wälzkörper bei einer Bewegung der Auszugsführung (1) an der Kontaktfläche benetzbar sind.

4. Auszugsführung nach einem der Ansprüche 1 bis 3, **dadurch gekennzeichnet, dass** das schmierstoffhaltige Material aus Sintermaterial oder Kunststoff besteht, in dem Öl als Schmierstoff eingelagert ist.

5. Auszugsführung nach einem der Ansprüche 1 bis 4, **dadurch gekennzeichnet, dass** die Wälzkörper (5) in einem einzigen Wälzkörperkäfig (6) eingelagert sind, der vollständig aus dem schmierstoffhaltigen Material besteht.

6. Auszugsführung nach einem der Ansprüche 1 bis 4, **dadurch gekennzeichnet, dass** der Wälzkörperkäfig (10) eine Vielzahl von Taschen (13) aufweist, in die jeweils ein Wälzkörperhalter (11) aus schmierstoffhaltigem Material mit einem Wälzkörper (5) eingelagert ist.

7. Auszugsführung nach Anspruch 6, **dadurch gekennzeichnet, dass** der Wälzkörperhalter (11) form-, kraft-, und / oder stoffschlüssig an dem Wälzkörperkäfig (10) festgelegt ist.

8. Auszugsführung nach einem der Ansprüche 1 bis 4, **dadurch gekennzeichnet, dass** der Wälzkörperkäfig (20) leistenförmig ausgebildet ist und einzelne Aufnahmen (22) für Wälzkörper (5) aufweist, wobei zumindest der Bereich der Aufnahme (22) mit dem schmierstoffhaltigen Material beschichtet ist.

9. Auszugsführung nach einem der Ansprüche 1 bis 8, **dadurch gekennzeichnet, dass** der Wälzkörperkäfig (30) leistenförmig ausgebildet ist und hervorstehende Streifen (31, 32) oder Vorsprünge aufweist, die sich bis zum äußeren Umfang der Wälzkörper (5) oder geringfügig darüber hinaus erstrecken.

10. Auszugsführung nach Anspruch 9, **dadurch gekennzeichnet, dass** jeder Streifen (31, 32) in Kontakt mit einer Lauffläche des Wälzkörpers (5) an den Schienen (2, 3, 4) steht.

11. Verfahren zur Herstellung einer Auszugsführung, insbesondere nach einem der vorhergehenden Ansprüchen, mit den folgenden Schritten:
a. Stanzen und Biegen einer Führungsschiene (2) und mindestens einer Laufschiene (3, 4);
b. Tränken mindestens eines porösen Körpers mit einem Schmierstoff, der zumindest einen Teil eines Wälzkörperkäfigs (6, 10, 20, 30) bildet;
c. Zusammensetzen der Führungsschiene (2), des Wälzkörperkäfigs (6, 10, 20, 30) und der mindestens einen Laufschiene (3, 4) zu einer Auszugsführung, und
d. Schmieren der Wälzkörper (5) und der Laufflächen durch Bewegen der mindestens einen Laufschiene (3, 4) relativ zu der Führungsschiene (2).

12. Verfahren nach Anspruch 11, **dadurch gekennzeichnet, dass** der poröse Körper und über einen Zeitraum von mehr als 2 Stunden, vorzugsweise mehr als 10 Stunden, in dem Schmierstoff getränkt wird.

13. Verfahren nach Anspruch 11, **dadurch gekennzeichnet, dass** der poröse Körper und über ein Hochdruckverfahren mit dem Schmierstoff gesättigt wird um das schmierstoffhaltige Material zu erhalten.

14. Verfahren nach Anspruch 13, **dadurch gekennzeichnet, dass** das Hochdruck-Verfahren bei Drücken von mehr als 4 bar, jedoch vorzugsweise bei nicht mehr als 15 bar durchgeführt wird.

15. Verfahren nach Anspruch 11 oder 12, **dadurch gekennzeichnet, dass** der Wälzkörperkäfig (10, 20, 30) ein leistenförmiges Trägermaterial umfasst, an dem ein poröser Körper beschichtet oder mechanisch festgelegt wird, wobei das Trägermaterial an gegenüberliegenden Endseiten mit einem porösen Körper beschichtet wird und an den porösen Körpern Taschen zur Aufnahme der Wälzkörper ausgebildet werden.

## Claims

1. A pull-out guide (1) for furniture, comprising a guide rail (2) that can be mounted on a furniture body and at least one sliding rail (3, 4) that is displaceably mounted via rolling elements (5) on the guide rail (2), wherein the rolling elements (5) are held in a rolling element cage (6, 10, 20, 30) which consists at least partly of a lubricant-containing material, **characterized in that** the part of the rolling element cage (6, 10, 20, 30) consisting of the lubricant-containing material is formed by a porous body which is impregnated with lubricant.

2. A pull-out guide according to claim 1, **characterized in that** the rolling elements (5) slide on the lubricant-containing material with a contact surface.

3. A pull-out guide according to claim 2, **characterized in that** the rolling elements can be wetted on the contact surface via the lubricant-containing material during a movement of the pull-out guide (1).

4. A pull-out guide according to one of the claims 1 to 3, **characterized in that** the lubricant-containing material consists of sintered material or plastic, in which oil is incorporated as a lubricant.

5. A pull-out guide according to one of the claims 1 to 4, **characterized in that** the rolling elements (5) are incorporated in a single rolling element cage (6) which consists completely of the lubricant-containing material.

6. A pull-out guide according to one of the claims 1 to 4, **characterized in that** the rolling element cage (10) comprises a plurality of pockets (13) in which one respective rolling element holder (11) made of a lubricant-containing material is incorporated with one rolling element (5).

7. A pull-out guide according to claim 6, **characterized in that** rolling element holder (11) is fixed to the rolling element cage (10) in a positive, non-positive and/or firmly bonded way.

8. A pull-out guide according to one of the claims 1 to 4, **characterized in that** the rolling element cage (20) is arranged in a strip-like manner and comprises individual receivers (22) for rolling elements (5), with at least the region of the receiver (22) being coated with the lubricant-containing material.

9. A pull-out guide according to one of the claims 1 to 8, **characterized in that** the rolling element cage (30) is arranged in a strip-like manner and comprises protruding strips (31, 32) or projections which extend up to the outer circumference of the rolling elements (5) or slightly beyond the same.

10. A pull-out guide according to claim 9, **characterized in that** each strip (31, 32) is in contact with a running surface of the rolling element (5) on the rails (2, 3, 4).

11. A method for producing a pull-out guide, especially according to one of the preceding claims, comprising the following steps:
a) punching and bending of a guide rail (2) and at least one sliding rail (3, 4);
b) impregnating at least one porous body with a lubricant, which body forms at least part of a rolling element cage (6, 10, 20, 30);
c) assembly of the guide rail (2), the rolling element cage (6, 10, 20, 30) and the at least one sliding rail (3, 4) into a pull-out guide, and
d) lubrication of the rolling elements (5) and the running surfaces by moving the at least one sliding rail (3, 4) relative to the guide rail (2).

12. A method according to claim 11, **characterized in that** the porous body is impregnated with the lubricant over a period of more than two hours, preferably more than 10 hours.

13. A method according to claim 11, **characterized in that** the porous body is saturated with the lubricant via a high-pressure process in order to obtain the lubricant-containing material.

14. A method according to claim 13, **characterized in that** the high-pressure process is carried out at pressures of more than 4 bars, but preferably not more than 15 bars.

15. A method according to claim 11 or 12, **characterized in that** the rolling element cage (10, 20, 30) comprises a strip-like carrier material, on which a porous body is coated or to which it is fixed mechanically, wherein the carrier material is coated at opposite ends with a porous body and pockets are formed on the porous bodies for accommodating the rolling elements.

## Revendications

1. Glissière de tiroir (1) pour meubles, comprenant une glissière de guidage (2) pouvant être montée sur un corps de meuble et au moins une glissière de roulement (3, 4) montée mobile sur la glissière de guidage (2) par l'intermédiaire de corps de roulement (5), les corps de roulement (5) étant montés dans une cage (6, 10, 20, 30) de corps de roulement, qui est constituée au moins en partie d'un matériau contenant un lubrifiant, **caractérisée en ce que** la partie de la cage (6, 10, 20, 30) de corps de roulement constituée du matériau contenant un lubrifiant est formée d'un corps poreux qui est imprégné de lubrifiant.

2. Glissière de tiroir selon la revendication 1, **caractérisée en ce que** les corps de roulement (5) glissent par leur surface de contact le long du matériau contenant un lubrifiant.

3. Glissière de tiroir selon la revendication 2, **caractérisée en ce que** les corps de roulement peuvent être imprégnés du matériau contenant un lubrifiant lors d'un déplacement de la glissière de tiroir (1) sur la surface de contact.

4. Glissière de tiroir selon l'une quelconque des revendications 1 à 3, **caractérisée en ce que** le matériau contenant un lubrifiant est constitué d'un matériau fritté ou d'une matière plastique dans laquelle de l'huile est insérée en tant que lubrifiant.

5. Glissière de tiroir selon l'une quelconque des revendications 1 à 4, **caractérisée en ce que** les corps de roulement (5) sont insérés dans une seule cage (6) de corps de roulement qui est entièrement constituée du matériau contenant un lubrifiant.

6. Glissière de tiroir selon l'une quelconque des revendications 1 à 4, **caractérisée en ce que** la cage (10) de corps de roulement comprend une pluralité de poches (13) dans lesquelles est inséré respectivement un support (11) de corps de roulement fait d'un matériau contenant du lubrifiant et comprenant un corps de roulement (5).

7. Glissière de tiroir selon la revendication 6, **caractérisée en ce que** le support (11) de corps de roulement est fixé par coopération de formes, à force et/ou par liaison de matières sur la cage (10) de corps de roulement.

8. Glissière de tiroir selon l'une quelconque des revendications 1 à 4, **caractérisée en ce que** la cage (20) de corps de roulement est en forme de baguette et comprend différents logements (22) pour les corps de roulement (5), au moins la zone du logement (22) étant revêtue du matériau contenant un lubrifiant.

9. Glissière de tiroir selon l'une quelconque des revendications 1 à 8, **caractérisée en ce que** la cage (30) de corps de roulement est en forme de baguette et comprend des bandes saillantes (31, 32) ou des parties saillantes qui s'étendent jusqu'à la périphérie extérieure des corps de roulement (5) ou légèrement au-delà de cette dernière.

10. Glissière de tiroir selon la revendication 9, **caractérisée en ce que** chaque bande (31, 32) est en contact avec une surface de roulement du corps de roulement (5) sur les glissières (2, 3, 4).

11. Procédé de production d'une glissière de tiroir, en particulier selon l'une quelconque des revendications précédentes, comprenant les étapes suivantes :
a. le découpage et le cintrage d'une glissière de guidage (2) et d'au moins une glissière de roulement (3, 4) ;
b. l'imprégnation d'au moins un corps poreux d'un lubrifiant qui forme au moins une partie d'une cage (6, 10, 20, 30) de corps de roulement ;
c. l'assemblage de la glissière de guidage (2), de la cage (6, 10, 20, 30) de corps de roulement et de la ou des glissières de roulement (3, 4) pour obtenir une glissière de tiroir, et
d. la lubrification des corps de roulement (5) et des surfaces de roulement à la suite du déplacement de la ou des glissières de roulement (3, 4) par rapport à la glissière de guidage (2).

12. Procédé selon la revendication 11, **caractérisé en ce que** le corps poreux est imprégné du lubrifiant pendant un laps de temps supérieur à 2 secondes, de préférence supérieur à 10 secondes.

13. Procédé selon la revendication 11, **caractérisé en ce que** le corps poreux est saturé du lubrifiant au moyen d'un procédé à haute pression afin d'obtenir le matériau contenant un lubrifiant.

14. Procédé selon la revendication 13, **caractérisé en ce que** le procédé à haute pression est mis en oeuvre à des pressions supérieures à 4 bar, mais de préférence non supérieures à 15 bar.

15. Procédé selon la revendication 11 ou 12, **caractérisé en ce que** la cage (10, 20, 30) de corps de roulement comprend un matériau de support en forme de baguette sur lequel un corps poreux est revêtu ou fixé mécaniquement, le matériau de support étant revêtu sur les faces d'extrémité opposées d'un corps poreux et des poches servant à loger les corps de roulement étant formées sur les corps poreux.
